# FASCICULE DE BREVET EUROPEEN

(11) **EP 4 261 427 B1**
(45) Date de publication et mention de la délivrance du brevet: **25.06.2025**
(21) Numéro de dépôt: 23166279.2
(22) Date de dépôt: 03.04.2023
(51) Int. Cl.: F16D 25/0638

(54) **EMBRAYAGE HUMIDE AMÉLIORÉ POUR SYSTÈME DE GROUPE MOTOPROPULSEUR**
VERBESSERTE NASSKUPPLUNG FÜR ANTRIEBSSTRANGSYSTEM
IMPROVED WET CLUTCH FOR POWERTRAIN SYSTEM

(30) Priorité: 14.04.2022 FR 2203499
(43) Date de publication de la demande: 18.10.2023
(73) Titulaire: VALEO EMBRAYAGES, 80009 Amiens (FR)
(72) Inventeur: VUAROQUEAUX, Guillaume, 80000 Amiens (FR); THIBAUT, François, 80000 Amiens (FR)
(74) Mandataire: Valeo Powertrain Systems

(56) Documents cités:
- EP-A1- 2 267 329
- DE-A1- 102019 133 281
- FR-A1- 3 110 879
- KR-B1- 101 911 493
- US-B2- 7 416 069

## Description

La présente invention concerne un embrayage humide amélioré pour système de groupe motopropulseur. L'invention concerne aussi un double embrayage humide et un triple embrayage humide comprenant cet embrayage humide amélioré.

La présente invention se rapporte notamment au domaine des systèmes de transmission de couple pour véhicules automobiles, notamment disposés entre un moteur thermique et une boîte de vitesses dans lequel une machine électrique tournante est disposée en parallèle à l'axe principal de la transmission ou coaxiale à l'axe principal de la transmission. Le système de transmission de couple peut être par exemple un double embrayage humide ou encore par exemple un triple embrayage humide, pour un véhicule automobile de type hybride dans lequel une machine électrique tournante est disposée dans le système de groupe motopropulseur.

Dans l'état de la technique, il est connu des véhicules automobiles de type hybride comprenant un double embrayage humide disposé entre un moteur à combustion interne et une boîte de vitesses, une machine électrique tournante ainsi qu'un embrayage de coupure de couple autrement appelé « embrayage K0 ». Un organe d'actionnement de cet embrayage de coupure de couple permet d'accoupler ou désaccoupler en rotation un vilebrequin du moteur à combustion interne à un rotor de la machine électrique tournante. Ainsi, il est possible de couper le moteur à combustion interne à chaque arrêt du véhicule et de le redémarrer grâce à la machine électrique tournante.

Egalement, la machine électrique tournante peut constituer un frein électrique ou apporter un surplus d'énergie au moteur à combustion interne pour l'assister ou éviter que celui-ci ne cale. Lorsque le moteur à combustion interne est en fonctionnement, la machine électrique peut jouer le rôle d'un alternateur. La machine électrique tournante peut également assurer l'entraînement du véhicule indépendamment du moteur à combustion interne. Une telle machine électrique tournante peut être disposée en ligne avec le double embrayage humide, c'est-à-dire que l'axe de rotation du rotor de la machine électrique tournante est confondu avec l'axe de rotation des embrayages comme décrit dans le document DE102012006730 A1. Dans cette situation, le rotor de la machine électrique tournante est fixé directement sur le porte-disques d'entrée de couple du double embrayage humide ce qui augmente fortement l'encombrement radial.

Il est connu que le double embrayage humide soit commandé à l'aide d'un système d'actionnement interne ou externe des embrayages multidisques, comprenant chacun un piston d'actionnement commandé ; soit au sein d'un carter d'actionnement (libre en rotation par rapport aux porte-disques); soit entre des chambres de commande et d'équilibrage ménagées en dessous des portes-disques. Chaque piston d'actionnement est équipé de joints d'étanchéité à lèvre.

En position débrayée, et en l'absence de moyens d'arrêt, le joint d'étanchéité recule au sein de la chambre de commande et vient en butée sur le fond de celle-ci. Dans cette position, les joints à lèvre sont comprimés et déformés. La répétition des phases d'embrayage et de débrayage altère à la longue l'intégrité et la géométrie des lèvres. La fiabilité du système d'actionnement est limitée. Le document FR3110879A1 divulgue également un embrayage humide pour système de groupe motopropulseur.

La base de l'invention est de réduire la perte de charge au niveau de la chambre d'équilibrage pour assurer un remplissage rapide de cette dernière.

On cherche à réaliser un arrêt du piston d'actionnement en dehors de la chambre de commande, dans des zones généralement exiguës du double embrayage, parmi lesquelles sont présents un grand nombre de composants, dont un dispositif de rappel élastique dudit piston dans la chambre
d'équilibrage. Ceci encombre fortement la chambre d'équilibrage, au risque de boucher les sortie d'huile du double embrayage qui alimentent la chambre d'équilibrage. D'où des pertes de charges.

Ceci impacte le bon fonctionnement de la chambre d'équilibrage. On a cherché à faciliter sa circulation en modifiant la forme des composants bouchant les sorties d'huile. Cependant les pertes restent importantes, avec des marges d'erreur importantes. Les étapes d'alignement des formes du piston avec d'autres perçages de sortie d'huile, et les marges d'erreur associées, sont restreintes et complexes à mettre en œuvre.

L'invention a notamment pour but d'apporter une solution simple, efficace et économique à ce problème. Le but de la présente invention est notamment de proposer un embrayage humide permettant de résoudre au moins en partie les inconvénients mentionnés de l'art antérieur.

Dans ce but, l'invention propose, selon l'un de ses aspects, un embrayage humide pour système de groupe motopropulseur comportant autour d'un axe X au moins :
- un ensemble multidisques reçu en partie par un support de disques assemblé fixement à un moyeu d'alimentation en lubrifiant,
- un piston d'actionnement dudit embrayage multidisques, reçu dans le moyeu d'alimentation et qui est mobile axialement par rapport au moyeu d'alimentation entre une position embrayée et une position débrayée de l'embrayage humide, le moyeu d'alimentation délimitant avec le piston d'actionnement une chambre de commande, à laquelle est associée une chambre d'équilibrage,
dans lequel la chambre d'équilibrage est alimentée en lubrifiant par des conduits d'alimentation d'une portion de sortie du moyeu d'alimentation débouchant ensemble dans au moins une gorge de sortie de ladite portion de sortie du moyeu d'alimentation, le piston d'actionnement comprenant une platine d'arrêt monobloc ou rapportée, comprenant une zone de butée configurée pour arrêter axialement le piston d'actionnement contre la portion de sortie du moyeu d'alimentation.

Au moins un évidement angulaire est ménagé depuis ladite zone formant butée de la platine d'arrêt de telle manière à évacuer le lubrifiant débouchant dans ladite au moins une gorge de sortie.

Dans un mode de réalisation de l'invention, le piston d'actionnement comprend une platine d'arrêt monobloc. Le piston d'actionnement et la platine d'arrêt sont de formes monoblocs, issues de matière. Le piston d'actionnement est configuré directement en butée contre la portion de sortie. La platine d'arrêt est réalisée par une forme du piston d'actionnement adaptée à cet effet.

Dans un autre mode de réalisation de l'invention, le piston d'actionnement comprend une platine d'arrêt rapportée au piston d'actionnement, la platine d'arrêt rapportée comprenant ladite zone de butée. Le piston d'actionnement est configuré indirectement en butée contre la portion de sortie. Le piston d'actionnement est défini par un ensemble d'au moins deux pièces rapportées, reliées solidaires entre elles par exemple par emboitement, coopération de forme et/ou liaison soudée.

Selon l'invention, le piston d'actionnement est configuré localement en butée, directement via sa propre forme (dite platine d'arrêt monobloc) ou indirectement via sa platine d'arrêt dite rapportée, contre la portion de sortie du moyeu d'alimentation. Ce qui présente l'avantage de réaliser un meilleur positionnement du piston en arrêt au sein de la chambre de commande. L'encombrement général est alors réduit, en disposant le piston d'actionnement ou la platine d'arrêt rapportée, radialement en deçà de la chambre d'équilibrage, au niveau de la sortie en lubrifiant pour alimenter la chambre d'équilibrage. Pour ne pas interférer avec cette dernière, la portion de sortie du moyeu d'alimentation comprend au moins une gorge de sortie pour la collecte de lubrifiant débouchant de conduits d'alimentation. On concentre l'accueil d'un maximum de lubrifiant dans un tel espace angulaire ménagé à cet effet.

En outre, au moins un évidement angulaire est ménagé depuis le piston d'actionnement ou la platine d'arrêt rapportée, pour diffuser un débit d'évacuation du lubrifiant suffisant entre la gorge de sortie et la chambre d'équilibrage. On se dispense de toute étape additionnelle de perçage ou d'alignement pour faire communiquer fluidiquement les conduits d'alimentations avec les évidements de la platine d'arrêt rapportée.

De ce fait, le piston d'actionnement ou la platine d'arrêt rapportée d'une part, et la portion de sortie du moyeu d'alimentation d'autre part, assurent à la fois, un arrêt mobile du piston d'actionnement par sa zone de butée directement ou indirectement formée sur ce dernier, ainsi qu'une meilleure alimentation en lubrifiant dans la chambre d'équilibrage.

La platine d'arrêt (31) comprend une pluralité d'évidements angulaires (300), qui communiquent fluidiquement avec l'au moins une gorge de sortie (200), lesdits évidements angulaires (300) étant espacés et répartis autour de l'axe (X) selon une répartition uniforme.

D'où une combinaison de fonctions distinctes, sans incidence de l'une vis-à-vis de l'autre.

On entend par embrayage humide, un embrayage adapté pour fonctionner dans un bain d'huile.

On entend par gorge de sortie angulaire, une cavité s'étendant autour de l'axe X et présentant un diamètre élargi par rapport à un conduit d'alimentation. Celle-ci définit une zone de circulation de lubrifiant en vue de son évacuation par l'au moins un évidemment angulaire de la platine d'arrêt rapportée.

Un tel embrayage humide peut présenter l'une ou l'autre des caractéristiques décrites ci-dessous combinées entre elles ou prises indépendamment les unes des autres :
- Chaque évidement angulaire peut communiquer fluidiquement avec l'au moins une gorge de sortie. L'ensemble des évidements angulaires peut communiquer avec une seule gorge de sortie. Ce qui augmente la section de passage du lubrifiant ;
   Alternativement, un évidement angulaire peut communiquer avec deux gorges de sortie distinctes ;
- La zone de butée, du piston d'actionnement ou de la platine d'arrêt rapportée, peut être ménagée sous forme d'au moins un secteur de butée angulaire, de préférence sous forme d'une série de secteurs de butée angulaires ;
- La zone de butée peut être ménagée depuis la périphérie interne, en particulier depuis l'extrémité radialement interne, du piston d'actionnement ou de la platine d'arrêt rapportée ;
   Par périphérie interne on entend un endroit de la pièce situé proche de l'axe de rotation de l'embrayage humide ;
- La zone de butée peut être une surface plane de forme annulaire en appui sur une portée plane réalisé sur un rebord de la portion de sortie du moyeu d'alimentation ;
- La zone de butée peut être ménagée sous forme d'au moins un secteur de butée angulaire de la platine d'arrêt, de préférence sous forme d'une série de secteurs de butée angulaires. Un secteur de butée angulaire peut être délimité entre deux évidements angulaires de la plaque d'arrêt ;
- Au moins un secteur de butée angulaire peut être configuré pour venir en butée sur l'extrémité de la portion de sortie du moyeu d'alimentation au niveau de l'au moins une gorge de sortie ;
- Au moins un secteur de butée du piston d'actionnement ou de la platine d'arrêt rapportée peut recouvrir partiellement une gorge de sortie, dans la direction radiale, en particulier depuis le diamètre extérieur de ladite gorge de sortie ;
- La portion de sortie du moyeu d'alimentation peut être continue sur 360 degrés, de préférence de forme cylindrique. La gorge de la portion de sortie du moyeu d'alimentation peut être en partie ménagée pour recevoir en butée le piston d'actionnement ou la platine d'arrêt rapportée.

En particulier, un logement ou cavité annulaire peut être ménagé(e) depuis la gorge de la portion de sortie pour recevoir le piston d'actionnement ou la platine d'arrêt rapportée. De cette manière, le positionnement du piston, et en particulier de la platine d'arrêt rapportée, est amélioré par utilisation d'une référence géométrique délimité par la réalisation de la gorge de sortie ;
- La portion de sortie du moyeu d'alimentation peut comprendre une piste de guidage sur laquelle le piston d'actionnement est mobile axialement. Cette piste de guidage peut être ménagée sur le diamètre extérieur, autrement dit la périphérie radialement externe, de la portion de sortie ;
- L'au moins une gorge de sortie du moyeu d'alimentation peut déboucher radialement en deçà d'une piste de guidage de la portion de sortie. Une telle gorge de sortie peut être ménagée radialement à l'intérieur de la portion de sortie, autrement dit depuis le diamètre intérieur de la portion de sortie du moyeu d'alimentation ;
- Le piston d'actionnement ou la platine d'arrêt rapportée, peut s'étendre radialement entre les chambre de commande et d'équilibrage ; Le piston d'actionnement ou la platine d'arrêt rapportée, peut délimiter en partie la chambre d'équilibrage ;
- Le piston d'actionnement ou la platine d'arrêt rapportée, peut être configuré(e) pour entourer au moins partiellement la portion de sortie du moyeu d'alimentation, en particulier dans la position débrayée de l'embrayage humide ;
- Dans un mode de réalisation particulier, la platine d'arrêt rapportée peut comprendre : une partie centrale annulaire adaptée pour retenir le piston d'actionnement et une partie périphérique annulaire adaptée à venir en butée sur la portion de sortie du moyeu d'alimentation, en particulier dans la position débrayée de l'embrayage humide ;
- La partie centrale annulaire peut être localisée au niveau de la chambre de commande ;
- La partie périphérique annulaire peut être localisée au niveau de la chambre d'équilibrage ;
- Le piston d'actionnement ou la platine d'arrêt rapportée, peut comprendre une pluralité d'évidements angulaires espacés et répartis angulairement autour de l'axe de rotation, selon une répartition régulière ou uniforme. On augmente la section de passage pour le lubrifiant ;
- Le nombre d'évidements peut être compris entre deux et vingt-quatre évidements angulaires.
- L'au moins un évidement angulaire peut être en partie aligné axialement avec un des orifices de sortie des conduits d'alimentation. Ce qui offre un débit conséquent en direction de la chambre ;
- L'au moins un évidement angulaire peut être en partie décalé angulairement par rapport aux orifices de sortie des conduits d'alimentation. Ce qui oblige le lubrifiant à circuler dans un sens de la gorge. D'où un recouvrement entre le piston et l'axe des orifices des conduits d'alimentation ; Dans les deux cas, cette gorge permet à la fois de réduire l'encombrement radial tout en conservant une large sortie d'alimentation ;
- Le moyeu d'alimentation peut comprendre une pluralité de gorges de sortie, chaque gorge de sortie étant liée à au moins un orifice. Par exemple un nombre supérieur à trois gorges.

On peut ménager une gorge de sortie autour de chaque orifice de sortie de conduit d'alimentation ;
- Le nombre de gorges peut être compris entre deux et dix gorges, par exemple inférieur à cinq ;
- L'au moins une gorge de sortie peut s'étendre autour de l'axe X de rotation sur au moins 90 degrés, de préférence 180 degrés ;
- Selon une première variante, le moyeu d'alimentation comprend une seule gorge de sortie dite centrale, qui peut s'étendre de manière continue, notamment sur 360 degrés. Ce qui réduit le nombre d'usinage nécessaire à la réalisation des sorties de lubrifiant ;
- Selon une autre variante, le moyeu d'alimentation comprend une pluralité de gorges de sortie espacées et réparties angulairement autour de l'axe de rotation, de manière régulière ou uniforme ;
- Ladite au moins une gorge de sortie du moyeu d'alimentation peut délimiter, avec la zone de butée du piston d'actionnement ou de la platine d'arrêt rapportée, une zone tampon angulaire d'évacuation du lubrifiant. On réduit ainsi la perte de charge tout en permettant au lubrifiant de mieux se diffuser dans la chambre d'équilibrage.

Par zone tampon on entend un espace interstitiel ménagé pour intercepter et acheminer le lubrifiant, depuis la sortie des conduits jusque dans la chambre d'équilibrage. Cet interstice ou air vide crée un tampon autorisant le piston d'actionnement ou la platine d'arrêt rapportée d'une part,
et la portion de sortie d'autre part, d'entrer en contact l'une avec l'autre sans empêcher une circulation de lubrifiant. Il existera toujours pour la circulation au lubrifiant quel que soit la position du piston, même en position débrayée de l'embrayage ;
- En particulier une zone tampon peut être délimitée entre la zone de butée et une paroi interne de la gorge de sortie. Une zone tampon peut être délimitée angulairement au moins partiellement entre la sortie de conduit d'alimentation et un évidement angulaire, de préférence entre deux évidements angulaires du piston d'actionnement ou de la platine d'arrêt rapportée ;
- Selon une première variante, le moyeu d'alimentation peut comprendre une seule zone tampon ;
- Selon une autre variante, le moyeu d'alimentation peut comprendre une pluralité de zones tampons espacées angulairement les unes des autres, selon une répartition régulière ou uniforme ;
- Ladite au moins une gorge de sortie peut délimiter, avec l'au moins un évidement angulaire du piston d'actionnement ou de la platine d'arrêt rapportée, une zone commune de sortie du lubrifiant.

L'aire d'une zone commune de sortie peut être supérieure à la moitié de l'aire de sortie d'un conduit d'alimentation du moyeu d'alimentation.

Le débit de lubrifiant est alors toujours plus important, la perte de charge est réduite en sortie du piston d'actionnement ou de la platine d'arrêt rapportée ;
En particulier, l'aire d'une zone commune de sortie peut être supérieure à l'intégralité de l'aire de sortie d'un conduit d'alimentation du moyeu d'alimentation.
- Ladite au moins une gorge de sortie du moyeu d'alimentation présente une aire de circulation λ2 angulaire du lubrifiant supérieure à la moitié de l'aire λ3 d'un secteur de butée de la plaque d'arrêt, étant donné que le flux de lubrifiant peut être divisé en deux dans la gorge de sortie ;
- Ladite au moins une gorge de sortie peut comprendre un lamage usiné dont le diamètre intérieur est supérieur au diamètre intérieure de la portion de sortie. Cette gorge crée un réservoir d'huile d'extension angulaire qui améliore le débit de la portion de sortie vers la chambre d'équilibrage ; Autrement dit, la sortie des conduits d'alimentation peut être décalée axialement par rapport aux bords de l'au moins une gorge de sortie d'une valeur Y comprise entre 1 et 10 mm ;
- Au moins un secteur de butée du piston d'actionnement ou de la platine d'arrêt rapportée, peut recouvrir une gorge de sortie, selon une superficie comprise entre 1/3 et 9/10 de l'aire de circulation λ2 de ladite gorge de sortie ;
- La chambre d'équilibrage peut être rendue étanche en partie par un support d'étanchéité ;
- Le support d'étanchéité peut être configuré pour frotter sur le piston d'actionnement
- Le support d'étanchéité peut être fixé sur la portion de sortie du moyeu d'alimentation, par soudure, de préférence réalisée avec ou sans apport de matière, par exemple une soudure laser ;
- Ladite au moins une gorge de sortie peut déboucher radialement au-delà d'une soudure fixant le support d'étanchéité sur la portion de sortie du moyeu d'alimentation
- Cette soudure peut être réalisée depuis le diamètre intérieur de la portion de sortie ;
- Cette soudure peut être continue et s'étendre sur 360 degrés ;
- Dans un mode de réalisation particulier, la platine d'arrêt rapportée peut être de forme complémentaire avec le fond du piston d'actionnement ;
- Le support d'étanchéité peut être configuré pour supporter un dispositif de rappel élastique du piston d'actionnement. La platine d'arrêt peut être de forme complémentaire avec le dispositif de rappel élastique, en particulier avec une plaque de retenue du dispositif de rappel élastique ;
- Le dispositif de rappel élastique est agencé pour ramener le piston d'actionnement dans la position débrayée de l'embrayage humide. La platine d'arrêt rapportée peut être intercalée axialement entre le dispositif de rappel élastique et le fond du piston d'actionnement ;
- Le dispositif de rappel élastique peut être en appui sur le piston d'actionnement. Selon une variante, le dispositif de rappel élastique peut comprendre deux plaques d'appui annulaires et une série de ressorts hélicoïdaux répartis circonférentiellement entre les deux plaques d'appui ;
- Selon une autre variante, le dispositif de rappel élastique peut comprendre une rondelle élastique d'application de charge appuyant directement sur le support d'étanchéité ;
- Le moyeu d'alimentation peut comprendre un canal d'alimentation alimentant en lubrifiant la chambre d'équilibrage et un autre canal d'alimentation distinct pour la chambre commande ;
- Le moyeu d'alimentation peut comprendre une bifurcation au niveau de la portion de sortie depuis laquelle sont formés les conduits d'alimentation à destination de la chambre d'équilibrage ;
- Le moyeu d'alimentation peut être un moyeu d'entrée de couple de l'embrayage ;
- Le moyeu d'alimentation peut comprendre une portion cylindrique et un flasque s'étendant radialement depuis la portion cylindrique destiné à l'appui du support de disques ;
- Le support de disques et le flasque du moyeu d'entrée de couple peuvent être assemblés fixement par une liaison soudée localisée sur la périphérie interne de la collerette, le diamètre extérieur de la cannelure étant décalé radialement par rapport à la liaison soudée ;
- Le support de disques est en appui sur le flasque du moyeu d'entrée de couple grâce à la collerette, ce qui simplifie le positionnement axial de la cannelure par rapport audit moyeu d'entrée de couple, ladite cannelure pouvant être disposée à l'extérieur ou à l'intérieur du support de disques. Cet embrayage humide selon l'invention présente l'avantage, de réduire les défauts géométriques de l'assemblage par soudure ;

L'invention a également pour objet, selon un deuxième aspect, un module d'embrayage humide pour système de groupe motopropulseur comprenant au moins un embrayage de coupure de couple reprenant tout ou partie des caractéristiques mentionnées précédemment, commandé pour accoupler sélectivement un arbre menant à une machine électrique tournante.

Un tel module d'embrayage humide peut comprend en outre au moins un premier embrayage humide disposé radialement à l'intérieur de l'embrayage de coupure, qui est commandé pour accoupler sélectivement un arbre menant à un premier arbre mené, par exemple de boite de vitesses. Cet embrayage peut être relié à l'embrayage de coupure, pour transmettre le couple.

L'invention a également pour objet, selon un deuxième aspect, un module d'embrayage humide pour système de groupe motopropulseur comprenant au moins
un premier embrayage humide et un deuxième embrayage disposé radialement à l'intérieur du premier embrayage, commandés pour accoupler sélectivement un arbre menant à un premier arbre mené ou à un deuxième arbre mené, par exemple de boite de vitesses,
dans lequel les embrayages comprennent chacun une chambre de commande, à laquelle est associée une chambre d'équilibrage, au moins l'un desdits embrayages est un embrayage humide reprenant tout ou partie des caractéristiques mentionnées précédemment.

Cette disposition est particulièrement adaptée au double embrayage humide pour lequel une architecture radiale compacte est recherchée. Grace à cette architecture, les embrayages sont concentriques et disposés radialement dans un même plan. L'encombrement axial d'un tel double embrayage humide au sein d'un système de groupe motopropulseur est ainsi réduit.

L'invention a également pour objet, selon un troisième aspect, un module d'embrayage humide pour système de groupe motopropulseur comprenant au moins :
- un premier embrayage et un deuxième embrayage disposé radialement à l'intérieur du premier embrayage, commandés pour accoupler sélectivement un arbre menant à un premier arbre mené ou à un deuxième arbre mené, par exemple de boite de vitesses,
- un embrayage de coupure de couple, commandé pour accoupler sélectivement un arbre menant à une machine électrique tournante, qui est disposé radialement au-dessus des premier et deuxième embrayages,
dans lequel les embrayages comprennent chacun une chambre de commande, à laquelle est associée une chambre d'équilibrage, au moins l'un desdits embrayages est un embrayage humide reprenant tout ou partie des caractéristiques mentionnées précédemment.

Cette disposition est particulièrement adaptée au triple embrayage humide pour lequel une architecture radiale compacte est recherchée. Grace à cette architecture, les embrayages sont concentriques et disposés radialement dans un même plan. L'encombrement axial d'un tel triple embrayage humide au sein d'un système de groupe motopropulseur est ainsi réduit.

Un tel module d'embrayage humide, selon le deuxième ou troisième aspect, peut présenter l'une ou l'autre des caractéristiques décrites ci-dessous, combinées entre elles ou prises indépendamment les unes des autres :
- Le moyeu d'alimentation peut être commun aux embrayages et alimenter distinctement lesdits chambres de commande et d'équilibrage de chaque embrayage, par exemple par une série de canaux d'alimentation distincts, répartis de manière angulaire ou uniforme autour de l'axe X.
- Le moyeu d'alimentation forme l'ensemble des chambres de commande desdits embrayages ;
- Le moyeu d'alimentation forme en partie l'ensemble des chambres d'équilibrage desdits embrayages ;
- Un couvercle d'entrainement peut être rapporté sur la périphérie extérieure du flasque du porte-disques de transmission de couple et comprendre une couronne dentée apte à être liée en rotation avec une machine électrique tournante autour d'un axe parallèle à l'axe de rotation X ;
   Cette disposition permet de positionner la machine électrique tournante en fonction de l'espace disponible dans la chaine de transmission de couple du véhicule.

Cette disposition permet notamment de ne pas avoir à disposer la machine électrique axialement à la suite des embrayages, ce qui serait négatif pour la compacité axiale.

Cette disposition permet notamment de ne pas avoir à disposer la machine électrique tournante radialement au-delà des embrayages, ce qui serait négatif pour la compacité radiale.

De manière alternative, une chaine ou une courroie peut être utilisée pour relier la machine électrique tournante à la zone de connexion.
- Le couvercle d'entrainement peut comprendre une zone de connexion apte à être lié en rotation avec une machine électrique tournante autour d'un axe parallèle à l'axe de rotation X. La zone de connexion peut être décalée axialement de l'embrayage de coupure et/ou des premier et deuxième embrayages. La machine électrique tournante est alors dite « off-line ».
- Le couvercle d'entrainement peut former le support de disque recevant en partie l'ensemble multidisques de l'embrayage de coupure de couple, ladite cannelure étant issue de matière avec le couvercle d'entrainement ou rapportée sur le couvercle d'entrainement ;
- Le couvercle d'entrainement peut entourer le pourtour extérieur du flasque.

Grace à cette architecture de triple embrayage humide, les embrayages sont concentriques et disposés radialement dans un même plan. L'encombrement axial d'un tel triple embrayage humide au sein d'un système de groupe motopropulseur est ainsi réduit.

Le positionnement du couvercle d'entrainement sur le pourtour extérieur du porte-disques de transmission de couple limite les mouvements de nutation du triple embrayage humide.

Les jeux de dentures au niveau de la liaison cinématique avec le rotor de la machine électrique tournante sont réduit. Cela a pour effet de réduire le niveau de bruyance au sein de la transmission ;

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
- la [Fig. 1] représente une vue en coupe axiale d'un triple embrayage humide selon un premier mode de réalisation de l'invention ;
- la [Fig. 2] représente une vue en coupe radiale du premier mode de réalisation de la [Fig. 1] ;
- la [Fig. 3] représente une coupe radiale détaillée du premier mode de réalisation de la [Fig. 2] ;
- la [Fig. 4] représente une coupe axiale détaillée du premier mode de réalisation de la [Fig. 2] ;
- la [Fig. 5] représente une autre coupe axiale détaillée du premier mode de réalisation de la [Fig. 2] ;

On entend par :
- un « engin de mobilité » : les véhicules automobiles, les véhicules passagers, mais aussi les véhicules industriels, notamment les poids lourds, les véhicules de transport en commun ou les véhicules agricoles, mais également tout engin de transport permettant de faire passer d'un point à un autre un être vivant et/ou un objet ;
- un « embrayage de coupure », au sens de la présente demande, est celui situé radialement à l'extérieur, au plus loin de l'axe X ;
- un « ensemble multidisques », un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie ;

Dans la suite de la description et des revendications, on utilisera à titre non limitatif et afin d'en faciliter la compréhension, les termes " avant " ou " arrière " selon la direction par rapport à une orientation axiale déterminée par l'axe X principal de rotation de la transmission du véhicule automobile et les termes " intérieur / interne " ou " extérieur / externe " par rapport à l'axe X et suivant une orientation radiale, orthogonale à ladite orientation axiale.

Dans la suite de la description et des revendications, on peut indexer certains éléments comme :
les premier et deuxième embrayages, les première et deuxième arbres, etc. Il s'agit d'un simple indexage pour différencier et nommer des éléments proches mais non identiques.

L'indexation n'implique pas une priorité d'un élément par rapport à un autre et on peut aisément inter-changer de telles dénominations sans sortir du cadre de la description.

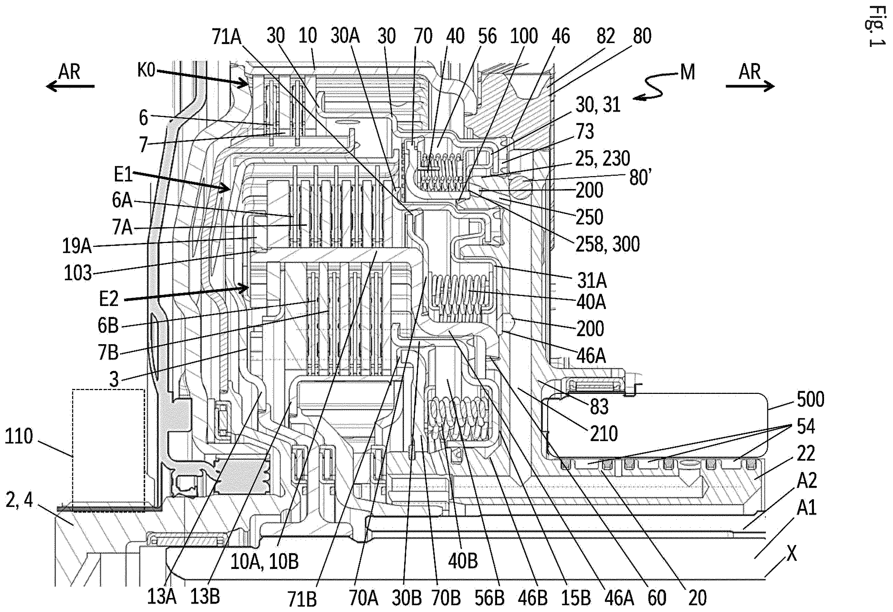

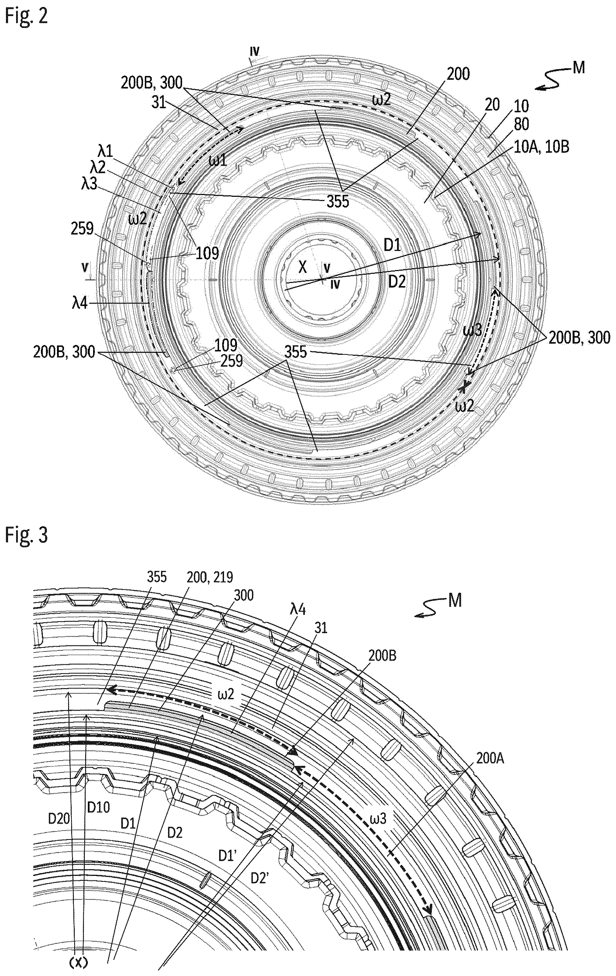

On a représenté sur les [Fig.1] et [Fig. 2] un premier mode de réalisation d'un embrayage humide E1 selon l'invention, intégré au sein d'un module M embrayage humide dit triple embrayage humide. Le triple embrayage humide est représenté au sein d'un système de groupe motopropulseur de véhicule automobile par l'intermédiaire d'un carter de boite de vitesses équipé de deux arbres A1, A2 menés de sortie de couple.

Sur la figure 1, on observe un module M dit triple embrayage humide comprenant :
- un embrayage de coupure de couple K0 de type multidisques, commandé pour accoupler sélectivement un arbre menant à une machine électrique,
- un premier embrayage humide E1 de sortie de couple et un deuxième embrayage humide E2 de sortie de couple respectivement de type multidisques, commandés pour accoupler sélectivement la machine électrique et/ou l'arbre menant à un premier arbre mené et à un deuxième arbre mené, les premier et deuxième embrayages humides E1, E2 étant disposés radialement l'un au-dessus de l'autre, et
- un moyeu d'entrée de couple dit moyeu d'alimentation 20 ayant pour fonction d'introduire le couple au sein des embrayages et pour autre fonction d'alimenter en fluide, par exemple en huile, les chambres de commande et les chambres d'équilibrage de l'embrayage de coupure de couple K0, du premier embrayage humide E1 et du deuxième embrayage humide E2.

Le premier embrayage humide E1 est de type multidisques et fonctionne dans un environnement humide. Le premier embrayage humide E1 comprend notamment un ensemble multidisques composé de flasques 6A et de disques 12 de friction, un support de disques 10 agencé pour recevoir l'ensemble multidisques et le moyeu d'alimentation 20. Le support de disques 10 est assemblé fixement au moyeu d'alimentation 20, par exemple par soudure 120.

Le moyeu d'alimentation 20 d'axe de rotation X comprend :
- au moins une portion de sortie 25 (nommée également portion cylindrique),
- un flasque 83 s'étendant radialement depuis la portion de sortie 25,
- une première renfoncement 46A annulaire disposée sur le côté du flasque et agencée pour recevoir un piston d'actionnement 30A du premier embrayage E1,
- une deuxième renfoncement 46B annulaire disposé sur le même côté du flasque que le renfoncement annulaire et agencé pour recevoir un piston d'actionnement 30B du deuxième embrayage E2,
- une troisième renfoncement 46 annulaire disposé radialement au-delà des deux autres renfoncements annulaires et agencé pour recevoir un piston d'actionnement 30 de l'embrayage de coupure de couple K0, et
- des canalisations d'alimentation 250 en fluide formées dans le moyeu d'alimentation 20 traversant la portion de sortie 25 et le flasque, et débouchant séparément dans les renfoncements 46, 46A, 46B.

Les renfoncements 46, 46A, 46B annulaires de l'embrayage de coupure de couple K0, du premier embrayage E1 et du deuxième embrayage E2 sont orientées dans une même direction, par exemple en direction de l'arbre menant, c'est-à-dire en direction du moteur thermique du système de groupe motopropulseur. Les renfoncements annulaires 46, 46A, 46B servent de chambre de commande pour les embrayages K0, E1, E2 respectifs.

Le triple embrayage humide 1 comporte autour de son axe de rotation X au moins un élément d'entrée 2 de couple qui est lié en rotation à un arbre menant (non représenté).

L'élément d'entrée 2 est situé à l'avant du triple embrayage humide 1. Dans le premier mode de réalisation, l'élément d'entrée 2 présentant globalement une forme en « L », comporte une partie d'orientation radiale formée par un voile 3 d'entrée de couple et une partie d'orientation axiale formée par un moyeu cannelé 4. L'élément d'entrée 2 de couple est guidé en rotation à l'intérieur d'un boitier 110 fixe par rapport au système de groupe motopropulseur.

L'élément d'entrée 2 d'entrée de couple est par exemple lié en rotation par l'intermédiaire de cannelures formées à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur thermique équipant le véhicule automobile. Le voile 3 d'entrée de couple comporte, à son extrémité radiale externe une cannelure agencée pour recevoir l'ensemble multidisques de l'embrayage de coupure de couple K0.

Dans l'exemple considéré, le triple embrayage humide 1 comprend en outre un embrayage de coupure de couple K0 accouplant sélectivement et par friction le voile 3 d'entrée de couple et un porte-disque intermédiaire 81 de l'embrayage de coupure de couple K0 solidaire en rotation avec le moyeu d'alimentation 20.

L'embrayage de coupure de couple K0 comprend un ensemble multidisques comprenant plusieurs disques 7 de friction, équipés de garnitures de friction, solidaires en rotation du voile 3 d'entrée de couple, plusieurs flasques 6 respectivement disposés de part et d'autre de chaque disque 7 de friction, solidaires en rotation du porte-disque intermédiaire dit support de disques 10. L'embrayage de coupure de couple K0 est actionné par un piston d'actionnement 30 mobile axialement, ici de l'arrière vers l'avant, entre une position débrayée et une position embrayée qui correspondent respectivement aux états ouvert et fermé de l'embrayage de coupure de couple K0. Le piston d'actionnement 30 pince les garnitures de friction de manière à transmettre un couple entre le voile 3 d'entrée de couple et le porte-disque intermédiaire 81.

Les flasques 6 de l'ensemble multidisques de l'embrayage de coupure de couple K0 sont liés en rotation au moyeu d'alimentation 20 par l'intermédiaire d'une cannelure et les disques 7 de friction liés en rotation à l'élément d'entrée 2. Le moyeu d'alimentation 20 comprend un couvercle d'entrainement 80 rapporté sur le pourtour extérieur du flasque 83.

Dans le cas présent, le couvercle d'entrainement 80 forme en partie le renfoncement annulaire 46. Le moyeu d'alimentation 20 a pour fonction de transmettre le couple au sein du triple embrayage humide 1. Pour cela, le couvercle d'entrainement 80 est solidaire en rotation avec le porte-disque intermédiaire 81, dans le cas présent par l'intermédiaire d'une liaison soudée.

De manière analogue, le premier embrayage E1 comporte un piston d'actionnement 30A de l'ensemble multidisques qui est mobile axialement, ici de l'arrière vers l'avant, entre une position débrayée et une position embrayée qui correspondent respectivement aux états ouvert et fermé du premier embrayage E1. L'ensemble multidisques du premier embrayage E1 est actionné directement par un piston d'actionnement 30A réalisée à partir d'une tôle d'acier emboutie.

Le piston d'actionnement 30A est mobile axialement par rapport au premier renfoncement 46A du moyeu d'alimentation 20.

L'ensemble multidisques du premier embrayage E1 comporte des flasques 6A liés en rotation à un support de disques 10A rapporté sur le moyeu d'alimentation 20 et des disques 7A de friction liés en rotation à un premier porte-disque de sortie 13. Les disques 7A de friction sont, unitairement, axialement interposés entre deux flasques 6A successifs.

Le premier porte-disque de sortie 13A du premier embrayage E1 est lié en rotation par engrènement avec les disques 7A de friction et par une liaison cannelée avec ledit premier arbre A1 mené. L'extrémité radiale intérieure du premier porte-disque de sortie 13A est solidarisée à un moyeu de sortie cannelé.

De manière analogue, le deuxième embrayage E2 comporte un piston d'actionnement 30B de l'ensemble multidisques qui est mobile axialement, ici de l'arrière vers l'avant, entre une position débrayée et une position embrayée qui correspondent respectivement aux états ouvert et fermé du deuxième embrayage E2. L'ensemble multidisques du deuxième embrayage E2 est actionné directement par un piston d'actionnement 30B réalisée à partir d'une tôle d'acier emboutie.

Le piston d'actionnement 30B est mobile axialement par rapport au deuxième renfoncement 46A du moyeu d'alimentation 20.

L'ensemble multidisques du deuxième embrayage E2 comporte des flasques 7B liés en rotation au support de disques 10B rapporté sur le moyeu d'alimentation 20 et des disques 6B de friction liés en rotation à un deuxième porte-disque de sortie 13B. Les disques 22 de friction sont, unitairement, axialement interposés entre deux flasques 21 successifs. Le deuxième porte-disque de sortie 13B du deuxième embrayage E2 est lié en rotation par engrènement avec les disques 7B de friction et par une liaison cannelée avec ledit deuxième arbre A2 mené. L'extrémité radiale intérieure du deuxième porte-disque de sortie 13B est solidarisée à un moyeu de sortie cannelé.

Le couvercle d'entrainement 80 comprend une zone de connexion 82 apte à être lié en rotation avec une machine électrique tournante. Dans le cas présent, la machine électrique tourne autour d'un axe parallèle à l'axe de rotation X. La machine électrique est dite « off-line » car elle n'est pas concentrique à l'arbre de transmission mais alignée selon un arbre parallèle. La zone de connexion 82 est apte à coopérer directement avec un pignon de la machine électrique tournante.

La zone de connexion 82 peut être réalisée sous la forme d'une couronne apte à être engrenée directement par un pignon ou indirectement (courroie, chaine...) de la machine électrique tournante (non visible). La couronne peut présenter une denture hélicoïdale de forme complémentaire au pignon de la machine électrique tournante.

Le moyeu d'alimentation 20 est apte à transmettre le couple en provenance de deux sources distinctes, thermique et électrique.

Lorsque l'embrayage de coupure de couple K0 est fermé, le couple issu du moteur thermique peut alors être transmis aux arbres coaxiaux A1, A2 de boite de vitesses en fonction de la fermeture de l'un ou de l'autre du premier embrayage E1 ou du deuxième embrayage E2. Le premier arbre A1 mené est entraîné en rotation lorsque ledit premier embrayage E1 est fermé et le deuxième arbre A2 mené est entraîné en rotation lorsque ledit deuxième embrayage E2 est fermé.

Sur la [Fig. 1], le support de disques 10A, 10B de forme annulaire comporte une cannelure externe qui engrène avec l'ensemble multidisques du premier embrayage E1 et une cannelure interne qui engrène avec l'ensemble multidisques du deuxième embrayage E2.

Le support de disques comprend une extrémité libre 103 pourvue de la cannelure externe et une autre extrémité pourvue d'une collerette 104 en appui sur le flasque 83. La collerette 104 comprend notamment une surface plane de forme annulaire en appui sur une portée plane 59 du flasque et une périphérie interne centrée sur un rebord 58 du flasque. La liaison soudée 60 est localisée sur la périphérie interne de la collerette 104. Ce positionnement de la collerette 104 sur le flasque 83 présente l'avantage de réduire les défauts géométriques de l'assemblage par soudure.

Le support de disques 10A, 10B est commun au premier embrayage E1 et au deuxième embrayage E2 est assemblé fixement au moyeu d'alimentation 20 par l'intermédiaire d'une liaison soudée 60 localisée sur la périphérie interne 106 dudit support de disques.

Le diamètre extérieur de la cannelure externe du support de disques 10A, 10B est décalé radialement par rapport à la liaison soudée 60. Le support de disques 10A, 10B commun au premier embrayage E1 et au deuxième embrayage E2 permet de former un double embrayage humide particulièrement compact axialement et radialement.

En variante non représentée, les cannelures interne et externe engrenant avec les ensembles multidisques des embrayages E1 et E2 peuvent être réparties sur deux support de disques distincts et rapportés sur le moyeu d'entrée de couple.

D'un point de vue fonctionnement général, le triple embrayage humide 1 est commandé hydrauliquement par l'intermédiaire d'un fluide sous pression, généralement de l'huile.

Pour commander sélectivement le changement d'état de l'embrayage de coupure de couple K0, du premier embrayage E1 et du deuxième embrayage E2, un dispositif de commande du triple embrayage humide gère l'alimentation en huile sous pression au sein de chambres de commande séparées. Le dispositif de commande est généralement intégré au carter de boite de vitesses.

Le dispositif de commande est raccordé au moyeu d'alimentation 20 qui comporte des canalisations d'alimentation 54, 210, 250 d'huile sous pression, par exemple au nombre de trois.

Les canalisations d'alimentation 54, 210, 250 sont réparties angulairement autour de la portion cylindrique. La canalisation d'alimentation 54, 210, 250 est réalisée par perçage de conduites successives axiales et radiales au sein du moyeu d'alimentation 20.

Comme cela est connu dans le fonctionnement d'un embrayage humide, une chambre d'équilibrage est associée à chaque chambre de commande. Les chambres d'équilibrage sont alimentées en fluide, par exemple du fluide de refroidissement. Le fluide de refroidissement empreinte des conduits d'alimentation 250 distincts des canalisations d'huile 54, 210. Ces conduits d'alimentation 250 distincts sont également formés dans le moyeu d'alimentation 20.

Chacune des canalisations dit canaux d'alimentation 54, 210, 250 sont constituées de perçages sensiblement radiaux et axiaux dirigés en direction des chambres de commande de l'embrayage de coupure de couple K0, des premier et deuxième embrayages E1, E2.

Les canaux d'alimentation 54, 210, 250 d'huile débouchent sur le pourtour extérieur du flasque 83 et sont refermées par le couvercle d'entrainement 80, ou encore par des billes 80' (voir Fig. 1).

La canalisation d'alimentation 54, 210, 250 usinée dans le moyeu d'alimentation 20 est associé à la chambre de commande 46, 46A, 46B.

Les conduites sont débouchant les unes dans les autres et agencées pour alimenter en fluide sous pression la chambre de commande 46, 46A, 46B de chaque embrayage.

En outre, le moyeu d'alimentation 20 comprend une série de canaux d'alimentation 210 distincts des chambres de commande 46, 46A, 46B et d'équilibrage 56, 56A, 56B de chaque embrayage.

Dans l'exemple considéré, chacune desdites chambres de commande 46, 46A, 46B et d'équilibrage 56, 56A, 56A comprend son propre canal d'alimentation. Ainsi le flasque 83 du moyeu d'alimentation 20 comprend quatre canaux d'alimentation 210 distincts, soit deux canaux par embrayage K0, E1 : un canal pour la chambre de commande 46, 46A et l'autre pour la chambre d'équilibrage 56, 56A.

Comme illustré sur la [Fig. 1], le canal de lubrification 210 alimentant en huile la chambres d'équilibrage 56 de l'embrayage K0 et comprend une bifurcation 215 formant la portion de sortie 81.

Le piston d'actionnement 30, 30A, 30B est commandé en déplacement au moyen de la chambre de commande 46, 46A, 46B et d'une chambre d'équilibrage 56, 56A, 56B. En outre :
- Ledit piston d'actionnement 30, 30A, 30B vient alternativement serrer axialement dans une position embrayée l'ensemble multidisques contre des moyens de réaction 19, 19A disposés sur l'extrémité libre de la cannelure externe du support de disques 10A, 10B et libérer axialement dans une position débrayée l'ensemble multidisques.
- Les moyens de réaction 19A peuvent être par exemple un anneau élastique. La chambre de commande 46, 46A, 46B est délimitée en partie par le piston d'actionnement 30, 30A, 30B et le moyeu d'alimentation 20, à laquelle est associée une chambre d'équilibrage 46, 46A, 46B.

Afin de faciliter le pilotage du piston d'actionnement 30, 30A, 30B, l'embrayage correspondant K0, E1, E2 utilise la chambre d'équilibrage 56, 56A, 56B alimentée en fluide de refroidissement.

Un tel moyeu d'alimentation peut être commun aux embrayages K0, E1, E2 et alimenter distinctement lesdits chambres de commande et d'équilibrage de chaque embrayage.

Pour améliorer la compacité du triple embrayage humide, chaque chambre d'équilibrage 56, 56A, 56B peut être disposée dans une cavité annulaire 15, 15A, 15B débouchant radialement vers l'extérieur et formée dans le moyeu d'alimentation 20. Le canal 210, 250, 250A, 250B débouche dans la chambre d'équilibrage 56, 56A, 56B annulaire formée en partie par une portion cylindrique du moyeu d'alimentation 20 et en partie par le support de disques 10A, 10B rapporté sur le flasque 83.

La chambre d'équilibrage 56, 56A, 56B est rendue étanche en partie par l'intermédiaire d'un support d'étanchéité 70, 70A, 70B disposé axialement entre un dispositif de rappel élastique 40, 40A, 40B et le support de disques 10, 10A, 10B. Le support d'étanchéité peut présenter une forme en L.

Chaque support d'étanchéité 70, 70A, 70B comprend au moins un premier joint d'étanchéité 71 disposé sur la périphérie externe du support d'étanchéité, de préférence surmoulé. En outre, un deuxième joint d'étanchéité peut être disposé sur la périphérie interne du support d'étanchéité.

Pour garantir l'étanchéité de la chambre d'équilibrage 56, 56A, 56B, le support d'étanchéité 70, 70A, 70B frotte directement sur le piston d'actionnement 30, 30A, 30B.

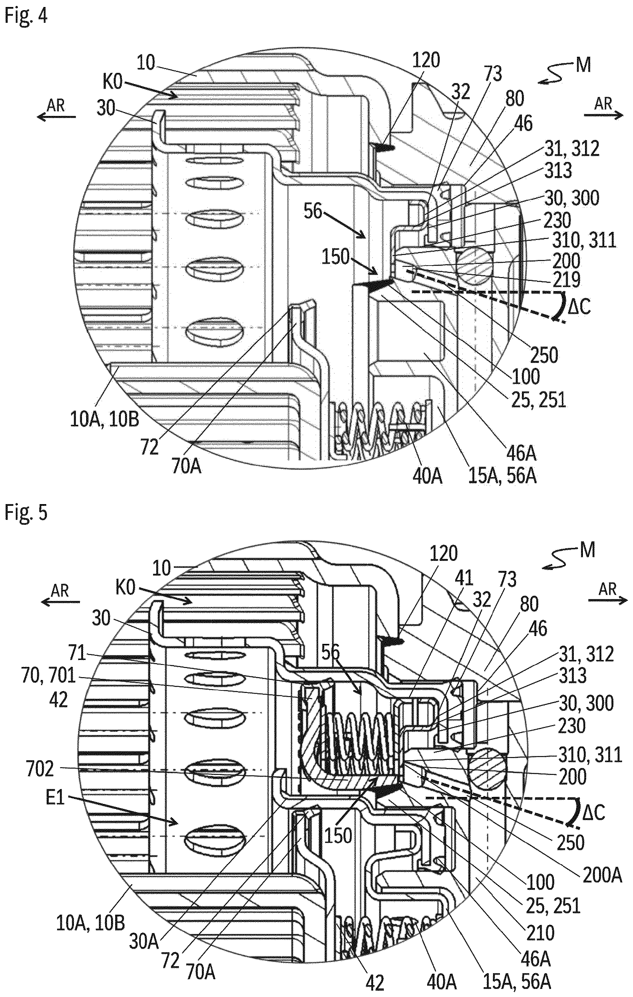

Sur les [Fig.1] et [Fig. 5], chaque dispositif de rappel élastique 40, 40A, 40B comprend deux plaques d'appui annulaires dites plaque de retenue 41, 42, et une série de ressorts hélicoïdaux répartis circonférentiellement entre les deux plaques d'appui. Le dispositif de rappel élastique 40, 40A, 40B est agencé pour ramener le piston d'actionnement 30, 30A, 30B dans la position débrayée de l'embrayage K0, E1, E2.

Pour l'embrayage de coupure de couple, le support d'étanchéité 70 comprend une paroi 701 radiale et un prolongement 702 axial, réalisant en section une forme sensiblement en L. Le support d'étanchéité 70, et notamment le prolongement 702, supporte le dispositif de rappel élastique 40.

Le support d'étanchéité 70 présente la forme d'une plaque annulaire dont le prolongement 702 est reçue dans la portion de sortie, dans un logement 258.

Le support d'étanchéité 70 est fixé par liaison soudée dite soudure 100 sur la portion de sortie 25, en particulier depuis le diamètre intérieur D1 de la portion de sortie.

La soudure 100 peut être continue sur 360°, par exemple soudure laser sans apport de matière, telle qu'illustrée sur les [Fig. 4] à [Fig. 5]. La soudure 100 peut être reçue dans le logement 258. Cette soudure 100 peut être réalisée entre l'extrémité axiale arrière AR du support d'étanchéité 70 et le rebord axial de la portion de sortie 25.

Selon un autre mode de réalisation possible, la liaison soudée peut être réalisée par transparence. Alternativement, la liaison entre ces deux composants peut être rivetée.

Pour les premier et deuxième embrayages E1, E2, une cavité annulaire 15A, 15B est formée par l'association de surfaces issues du support de disques 10A, 10B et du flasque 83.
- La chambre d'équilibrage 56A, 56B associé est disposée radialement au-delà de la chambre de commande 46A, 46B. La chambre d'équilibrage 56A, 56B des embrayages de sortie E1, E2 est délimitée en partie par le support de disques 10A, 10B, le piston d'actionnement 30A, 30B et un support d'étanchéité 70A, 70B ;
- La cavité annulaire 15A, 15B peut être disposée axialement entre le flasque 83 et la cannelure externe;
- Le positionnement de liaison soudée 60 du support de disques 10A, 10B sur le moyeu d'alimentation 20 autorise de décaler radialement la cannelure externe du premier embrayage E1 par rapport au moyeu d'alimentation 20. Il est ainsi possible d'implanter sur un espace annulaire de plus grand diamètre la chambre d'équilibrage 46A du premier embrayage humide E1 de sortie.

Pour l'embrayage de coupure de couple K0, une cavité annulaire 15 est formée par l'association de surfaces issues de la portion de sortie 25, du flasque 83 et du couvercle d'entrainement 80.
- La chambre de commande 46 est disposée radialement au-delà de la chambre d'équilibrage 56.
- La chambre d'équilibrage 56 de l'embrayage de coupure de couple K0 est délimitée en partie par la portion de sortie 25, le piston d'actionnement 30, un support d'étanchéité 70, et avantageusement le couvercle d'entrainement 80.
- La cavité annulaire 15 peut être disposée axialement entre le support d'étanchéité 70 et le flasque 83;
- Le positionnement de liaison soudée 60 du support de disques 10A, 10B sur le moyeu d'alimentation 20 autorise de décaler radialement la cannelure externe du premier embrayage E1 par rapport au moyeu d'alimentation 20. Il est ainsi possible d'implanter sur un espace annulaire de plus grand diamètre la chambre d'équilibrage 46A du premier embrayage humide E1 de sortie.

La portion de sortie 25 cylindrique, de préférence continue sur 360 degrés autour de l'axe X, est géométriquement au droit du couvercle d'entrainement 80. On limite les mouvements de nutation du triple embrayage humide et du support d'étanchéité 70.

La portion de sortie 25 comprend une piste de guidage 230, depuis laquelle est monté mobile axialement le piston d'actionnement 30, et dont l'extérieur définit le diamètre extérieur D2 de la portion de sortie selon l'axe X. La piste de guidage 230 est plane en section et favorise le glissement.

L'intérieur de la portion de sortie 25 définit le diamètre intérieur D1 de la portion de sortie selon l'axe X, et en particulier elle délimite en partie, avec le flasque 83, la cavité 15A annulaire du deuxième embrayage E2 de sortie.

Pour les premier et deuxième embrayages E1, E2, le support d'étanchéité 70A présente la forme d'une plaque annulaire dont la paroi latérale peut être maintenu en appui sur le support de disques. Le support d'étanchéité 70A est alors plaqué sur une face latérale du support de disques 10A, 10B orientée perpendiculairement à l'axe X.

Par ailleurs, pour contrôler son déplacement en phase débrayée, le piston d'actionnement 30, 30A comprend une platine d'arrêt 31, ici rapportée fixement à l'intérieur du piston d'actionnement, dans le fond 32. La platine d'arrêt 31 est de forme complémentaire avec le fond 32 du piston d'actionnement et avec une plaque de retenue du dispositif de rappel élastique 40.

Par ailleurs, la platine d'arrêt 31, 31A s'étend radialement entre les chambre de commande 46, 46A et d'équilibrage 56, 56A. La platine d'arrêt peut délimiter en partie la chambre d'équilibrage 56, 56A. La platine d'arrêt 31, 31A comprend une extrémité libre, de préférence radialement interne, dont l'intérieur définit le diamètre intérieur D1' de la platine d'arrêt selon l'axe X.

La platine d'arrêt 31, 31A est en partie logée dans la cavité annulaire 15, 15A, de préférence sous forme de repli de matière, dont l'extérieur définit le diamètre extérieur D2' selon l'axe X.

Pour l'embrayage de coupure de couple K0, la platine d'arrêt 31 est intercalée axialement entre le dispositif de rappel élastique 40 et le fond 32 du piston d'actionnement 30.

Par ailleurs, le dispositif de rappel élastique 40, 40A, 40B est en appui sur le piston d'actionnement 30, 30A, 30B. Sur la [Fig. 1], la platine d'arrêt 31, 31A est plaquée axialement, par l'intermédiaire du dispositif de rappel élastique 40, 40A, dans le fond 32 dudit piston d'actionnement associé.

La platine d'arrêt 31, 31A est mobile axialement, suivant la course axiale selon l'axe X dudit piston d'actionnement. La platine d'arrêt 31, 31A est alors ramenée à l'intérieur du renfoncement 46, 46A.

La platine d'arrêt 31, 31A est disposée axialement de manière à venir en butée contre le flasque 83 du moyeu d'alimentation, au niveau d'une zone de butée 310 de la platine d'arrêt prévue à cet effet.

Pour l'embrayage de coupure de couple K0, la zone de butée 310 de la platine d'arrêt est disposée axialement en regard de la portion de sortie 25 du moyeu d'alimentation, depuis la périphérie interne de la platine d'arrêt 31. En butant sur la portion de sortie 25, la platine d'arrêt 31 retient le piston d'actionnement dans sa course axiale. La zone de butée 310 de la platine d'arrêt peut être une surface plane, de forme annulaire, de préférence perpendiculaire à l'axe X de rotation, qui est configurée pour venir axialement en appui sur une portée plane d'un rebord de la portion de sortie.

Tel qu'illustré, la platine d'arrêt 31 comprend :
- une partie périphérique 311 annulaire, ici radialement interne, qui est destinée en butée sur la portion de sortie 25, en particulier dans la position débrayée de l'embrayage humide, et
- une partie centrale 312 annulaire, qui est logé dans le fond 32 et retient le piston d'actionnement.

Avantageusement, les parties périphérique 311 et centrale 312 annulaires sont décalés axialement l'une de l'autre, reliées par une collerette 313, autrement dit portion intermédiaire axiale.

La partie centrale 312 annulaire est localisée au niveau de la chambre de commande.

La partie périphérique 311 annulaire est localisée au niveau de la chambre d'équilibrage.

Tel qu'illustré pour l'embrayage de coupure de couple K0, des conduits d'alimentation 250 d'une chambre d'équilibrage 56 sont formés dans la portion de sortie 25 du moyeu d'alimentation.

Les conduits d'alimentation 250 sont alimentés en lubrifiant depuis le canal d'alimentation 210.

Afin d'améliorer l'écoulement de l'huile de lubrification, les conduits d'alimentation 250 de la portion de sortie 25 peuvent être inclinée par rapport à l'axe X d'un angle ΔC compris entre 0 et 60 degrés. Dans l'exemple considéré, l'angle ΔC est de 45° par rapport à l'axe X. Cette inclinaison facilite également l'usinage des conduits. Le moyeu d'alimentation peut comprendre notamment plusieurs portions de sortie 25 de conduits d'alimentation 250 réparties autour de l'axe de rotation X, par exemple six portions de sortie 25 réparties angulairement tous les 60 degrés.

La zone de butée 310 est formée depuis la partie périphérique 311 annulaire, en particulier l'extrémité radialement interne de la platine d'arrêt 31. La zone de butée 310 est une surface plane, d'extension radiale annulaire, destiné à venir en butée au droit de la portion de sortie 25.

La zone de butée 310 de la platine d'arrêt est délimité radialement entre un diamètre extérieur D2 de la portion de sortie 25 et un diamètre intérieur D1 de la platine d'arrêt 31.

Dans la position débrayée de l'embrayage de coupure de couple K0, la platine d'arrêt 31 et notamment la collerette 313, entoure en partie la portion de sortie 25 du moyeu d'alimentation.

La zone de butée 310 de la platine d'arrêt peut être angulairement discontinue, sous forme d'au moins un secteur de butée 355. Par ailleurs, un secteur de butée 355 de la platine d'arrêt, d'extension angulaire ω3, est délimité entre deux évidements 300 adjacents. Un secteur de butée 355 est délimité radialement et angulairement selon une superficie λ3.

Les [Fig. 2] et [Fig. 3] illustrent une platine d'arrêt 31 comprenant une série de secteurs de butée 355, ici au nombre de six, espacés angulairement les uns des autres, délimitant la zone de butée.

En particulier sur la [Fig. 2] les secteurs de butée 355 sont de formes identiques et d'extensions angulaires ω3 égale chacune à 30°, en particulier répartis angulairement autour de l'axe X selon un angle de 60°. Chaque secteur de butée 355 recouvre dans la direction radiale partiellement la gorge de sortie 200 en particulier le diamètre extérieur D20 de la gorge de sortie.

De cette manière, une partie de l'huile de lubrification peut s'évacuer depuis le diamètre intérieur D10 de la gorge de sortie, débouchant directement dans la chambre d'équilibrage 56.

L'ajustement du débit en sortie dépend du diamètre d'usinage intérieur D10 de la gorge de sortie et/ou du diamètre intérieur D1' de la platine d'arrêt. Par exemple, le débit d'huile de lubrification débouchant radialement en dessous de la platine d'arrêt est compris entre 0,1 et 17 litre par minute.

Par ailleurs, l'huile de lubrification s'évacue depuis la sortie des conduits d'alimentation 250 dite orifices de sortie 259, dans au moins une gorge de sortie 200 d'extension angulaire.

On entend par gorge de sortie 200 angulaire, une cavité présentant un diamètre élargi par rapport au diamètre de sortie d'un conduit d'alimentation en fluide du moyeu d'alimentation. Les orifices de sortie 259 sont répartis angulairement autour de l'axe X, selon une répartition régulière ou uniforme.

L'au moins une gorge de sortie 200 angulaire est formée dans la portion de sortie, en particulier au niveau de la zone de butée 310 de la platine d'arrêt. Une gorge de sortie 200 s'étend angulairement autour de l'axe X, d'une dimension angulaire ω2 qui peut être égale à au moins 60 degrés.

Dans l'exemple illustré, la seule gorge de sortie 200 est dimension angulaire ω2 égale à 360 degrés, c'est-à-dire de forme annulaire et de centre l'axe X de rotation.

En variante non illustrée, la portion de sortie du moyeu d'alimentation peut comprendre au moins une seule gorge de sortie de dimension angulaire égale à au moins 180 degrés.

Pour améliorer la compacité du triple embrayage humide, la portion de sortie 25, en partie la gorge de sortie, est ménagée pour recevoir en butée la platine d'arrêt 31. La platine d'arrêt, et notamment la zone de butée 310, s'étend au-delà du diamètre intérieur D10 de la gorge de sortie 200.

La platine d'arrêt 31, et notamment la zone de butée 310, est disposée radialement au même niveau que la gorge de sortie 200, de telle manière à venir masquer partiellement ladite la gorge de sortie.

La platine d'arrêt 31, et notamment la zone de butée 310, est disposée axialement en regard des orifices de sortie 259 des conduits d'alimentation 250 du piston d'actionnement.

Par ailleurs, la gorge de sortie 200 peut être ouverte dans la direction radiale sur l'extérieur, de préférence de manière incliné selon angle ΔC, c'est-à-dire dans le prolongement des conduits d'alimentation 250. En outre, un logement 150 par exemple une cavité annulaire, est ménagé depuis la gorge de sortie 200 pour recevoir la platine d'arrêt.

De cette manière, la gorge de sortie 200 est usinée depuis un rebord 251 d'extrémité axial de matière prévu à cet effet. Tout autre retrait de matière est également possible.

De préférence, la gorge de sortie 200, d'extension angulaire autour de l'axe X, guide le flux d'alimentation d'huile de lubrification en direction de la chambre d'équilibrage 56, autrement dit peut le faire circuler dans un sens angulaire, de préférence dans le sens de rotation de l'axe X.

De préférence, la gorge de sortie 200 débouche radialement en deçà de la piste de guidage 230 de la portion de sortie. La gorge de sortie 200 débouche radialement en dessous du dispositif de rappel élastique, pour communiquer fluidiquement avec la chambre d'équilibrage 56.

Par ailleurs, la gorge de sortie 200 débouche radialement au-delà du diamètre intérieur D1 de la portion de sortie. La gorge de sortie 200 débouche radialement au-delà de la soudure 100 fixant le support d'étanchéité 70 sur la portion de sortie 25.

Dans l'exemple considéré : - les orifices de sortie 259 débouchent, à un même niveau radial, dans une seule gorge de sortie 200 commune de la portion de sortie 25 ; - les évidements 300 de la platine d'arrêt communiquent fluidiquement en commun avec une seule gorge de sortie 200.

Autrement dit, l'huile de lubrification des conduits d'alimentation 250 débouche des orifices de sortie 259 d'aire λ1 avant d'être collectée dans la gorge de sortie 200 annulaire.

L'huile de lubrification est ensuite amenée à circuler, sous effet centrifuge, angulairement dans le sens direct de rotation de l'axe X. L'huile de lubrification circule au sein d'une aire de circulation λ2 de la gorge de sortie 200 qui est supérieure à la moitié de l'aire de sortie λ1 d'un orifice de sortie 259. Cette aire de circulation λ2 est définie au plus près de la platine d'arrêt 31. En milieu et/ou en fin de circulation de la gorge de sortie 200 est ménagé au travers de la platine d'arrêt, un à plusieurs évidements 300 assurant une évacuation de l'huile dans la chambre d'équilibrage.

En variante non illustrée, la portion de sortie 25 peut comprendre une pluralité de gorges de sortie, au nombre compris entre deux et quatre gorges de sorties réparties autour de l'axe X.

La gorge de sortie 200 délimite avec la platine d'arrêt 31 une pluralité de zones tampons qui sont délimités entre lesdits évidements 300. La sortie des conduits d'alimentation (orifices de sortie 259) peut être distante axialement de la paroi interne 219 de la gorge de sortie d'une valeur Y comprise entre 1 et 10 mm, de préférence de 5 mm.

Par ailleurs, l'huile de lubrification s'évacue dans la chambre d'équilibrage en traversant la platine d'arrêt 31. Pour ce faire au moins un évidement 300 angulaire est ménagé dans la zone de butée 310 de la platine d'arrêt pour évacuer l'huile de lubrification issu de la gorge de sortie 200.

Afin d'améliorer l'évacuation en huile de lubrification, l'ensemble des gorge(s) de sortie 200 et des évidement(s) 300 se chevauchent angulairement, grâce à leur disposition autour de l'axe X.

Chaque évidement 300 communique fluidiquement avec une gorge de sortie 200 de la portion de sortie, leur chevauchement angulaire délimitant en section une zone commune de sortie 200B d'huile de lubrification. La [Fig. 2] illustre cette pluralité de zones communes de sortie 200B d'huile d'une même gorge de sortie 200 qui sont espacés angulairement et répartis autours de l'axe X.

Les [Fig. 2] et [Fig. 3] illustrent une platine d'arrêt 31 comprenant une série d'évidements 300 angulaires, au nombre de six, espacés angulairement les uns des autres, en particulier ils sont répartis angulairement autour de l'axe X selon un angle de 60°.

Dans un autre mode de réalisation non illustré, un seul évidement 300 angulaire peut être ménagé dans la zone de butée 310 de la platine d'arrêt, par exemple pour communiquer fluidiquement avec une pluralité de gorges de sortie angulairement espacées. Ce seul évidement peut alors s'étendre selon un angle d'extension angulaire ω3 compris entre 110° et 310° autour de l'axe X.

Il est possible qu'aucun conduit d'alimentation ne soit visible depuis la [Fig. 2]. Les évidements 300 sont décalés angulairement par rapport aux orifices de sortie 259 des conduits d'alimentation. L'ensemble des orifices de sortie 259 est donc aligné axialement avec les secteurs de butée 355.

Dans un autre mode de réalisation non illustré, une seule zone commune de sortie d'huile peut être ménagé par la gorge de sortie avec la platine d'arrêt.

Dans l'exemple considéré, la zone commune de sortie 200B d'huile comprend une aire de sortie λ1 qui est supérieure à l'aire λ1 d'entrée d'un orifice de sortie 259 d'un conduit d'alimentation. Ce qui limite la perte de charge et donc le débit dans l'ensemble du circuit.

Chaque zone commune de sortie 200B d'huile, d'extension angulaire, est délimitée au moins partiellement entre une gorge de sortie 200 et un évidement 300, de préférence définie sur l'ensemble de l'évidement 300 d'extension angulaire ω3.

De cette manière, l'aire de sortie λ1 d'un orifice de sortie 259 est délimitée en section par le chevauchement des contours de la gorge de sortie 200 et d'un évidement 300 de la platine d'arrêt.

On entend par « aire de sortie » la mesure d'une surface de passage d'huile, délimitée en section par les contours d'une gorge de sortie 200 et/ou par un évidement 300 de la platine d'arrêt.

Par ailleurs, la gorge de sortie 200 délimite axialement avec la platine d'arrêt 31, une zone tampon 200A dite zone interstitielle de circulation et de réserve, de forme angulaire ou annulaire autour de l'axe X, qui autorise la circulation de lubrifiant même en position débrayée de l'embrayage pour laquelle la platine d'arrêt 31 est en butée contre la gorge de sortie 200. De cette manière, la platine d'arrêt 31 assure conjointement l'alimentation en lubrifiant de la chambre d'équilibrage 56 et la retenue uniforme du piston d'actionnement.

Afin de limiter davantage cette perte de charge, la gorge de sortie 200 délimite avec la platine d'arrêt 31 au moins un interstice, expressément ménagé(e) angulairement pour la circulation de lubrifiant.

Du fait de sa faible dimension, l'interstice peut se comporter comme une zone tampon de rétention du lubrifiant qui viendrait à s'introduire dans cet interstice.

Afin de créer une réserve d'huile de lubrification au niveau la gorge de sortie 200, il est possible d'usiner une zone de réserve 109 présentant un diamètre élargi par rapport à l'entrée de la gorge de sortie 200 d'axe X. La zone de réserve est de forme annulaire. La zone de réserve peut être ménagée aux abords des orifices de sortie 259, notamment à cet effet par usinage ou autre retrait de matière.

A titre d'exemple, la zone de réserve peut être une fraisure ou un lamage ménagé en bordure des orifices de sortie 259. En variante, la zone de réserve peut joindre plusieurs orifices de sortie 259 entre eux, de sorte à réaliser une rainure angulaire ou circulaire, dans la gorge de sortie 200.

Par ailleurs, la paroi interne 219 de la gorge de sortie délimite en partie l'au moins une zone tampon.

En particulier les orifices de sortie 259 sont espacés les uns des autres et répartis angulairement autour de l'axe de rotation, selon une répartition régulière ou uniforme.

En outre, les orifices de sortie 259 sont identiques, de contours circulaires et d'aire λ1. Les orifices de sortie 259 délimitent angulairement entre eux la paroi interne 219 de la gorge de sortie 200.

Par ailleurs, une zone tampon 200A est délimitée en partie par la zone de butée 310 de la platine d'arrêt, pouvant s'étendre de manière discontinue autours de l'axe X. Chaque zone tampon 200A est délimité angulairement par la dimension angulaire ω3 d'un secteur de butée 355 de la platine d'arrêt.

Autrement dit, une zone tampon 200A est délimité angulairement entre deux évidements 300 adjacents. De préférence, la dimension angulaire ω2 d'une gorge de sortie 200 est strictement supérieure à la dimension angulaire ω3 d'un secteur de butée 355 de la platine d'arrêt, en particulier un secteur de butée 355 angulaire de la platine d'arrêt.

Par ailleurs, la zone de butée de la platine d'arrêt recouvre partiellement ladite gorge de sortie.

En particulier les secteurs de butée 355 de superficie λ3 recouvrent partiellement la gorge de sortie, selon une superficie λ3 comprise entre 1/3 et 9/10 de l'aire de circulation λ2 de ladite gorge de sortie.

Afin de limiter cette perte de charge en huile, la gorge de sortie 200 communiquant directement avec les orifices de sortie 259 peut comprendre un lamage usiné dont le diamètre intérieur est supérieur au diamètre intérieure de la portion de sortie.

Le lamage usiné débouche radialement dans la zone de réserve 109, l'entrée des conduits d'alimentation (orifices d'entrée 259) étant décalée axialement par rapport au bord de la zone tampon. L'avantage est d'augmenter la section de passage de l'huile de lubrification. Le rendement de la lubrification est amélioré.

Bien que l'invention ait été décrite en liaison avec un seul mode de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

On comprend à la lecture de ce qui précède que la présente invention propose un triple embrayage humide dans lequel les embrayages sont concentriques et disposées radialement dans un même plan. L'encombrement axial d'un tel triple embrayage humide au sein d'une chaine de transmission de couple est réduit. Ce triple embrayage humide comprend une chambre d'équilibrage dont l'étanchéité est améliorée.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme du moyeu d'entrée de couple peut être modifiée sans nuire à l'invention, dans la mesure où ces composants, in fine, remplissent les mêmes fonctionnalités que celles décrites dans ce document.

Dans un mode de réalisation non illustrée, le piston d'actionnement et la platine d'arrêt peuvent être de forme monobloc, issue de matière, la platine d'arrêt dudit piston monobloc étant réalisée par déformation de matière, en particulier par emboutissage de forme. Autrement dit, une forme du piston d'actionnement définit géométriquement ladite platine d'arrêt. Les caractéristiques décrites précédemment s'appliquent alors mutatis mutandis à la platine d'arrêt dudit piston monobloc.

Dans les revendications, tout signe de référence entre parenthèses ne saurait être interprété comme une limitation de revendication.

## Revendications

1. Embrayage humide (K0, E1, E2) pour système de groupe motopropulseur comportant autour d'un axe X au moins :
- un ensemble multidisques (K0, E1, E2) reçu en partie par un support de disques (10) assemblé fixement à un moyeu d'alimentation (20) en lubrifiant,
- un piston d'actionnement (30) dudit embrayage multidisques (K0, E1, E2), reçu dans le moyeu d'alimentation (20) et qui est mobile axialement par rapport au moyeu d'alimentation entre une position embrayée et une position débrayée de l'embrayage humide,
le moyeu d'alimentation (20) délimitant en partie avec le piston d'actionnement, une chambre de commande (46), à laquelle est associée une chambre d'équilibrage (56),
dans lequel la chambre d'équilibrage est alimentée en lubrifiant par des conduits d'alimentation (250) d'une portion de sortie (25) du moyeu d'alimentation débouchant ensemble dans au moins une gorge de sortie (200) angulaire de ladite portion de sortie (25) du moyeu d'alimentation (20),
le piston d'actionnement (30) comprenant une platine d'arrêt (31) monobloc ou rapportée,
comprenant une zone de butée (310) configurée pour arrêter axialement le piston d'actionnement contre la portion de sortie (25) du moyeu d'alimentation, au moins un évidement angulaire (300) étant ménagé depuis la zone de butée (310) de la platine d'arrêt (31) pour évacuer le lubrifiant débouchant dans ladite au moins une gorge de sortie (200) , **caractérisé en ce que** la platine d'arrêt (31) comprend une pluralité d'évidements angulaires (300), qui communiquent fluidiquement avec l'au moins une gorge de sortie (200), lesdits évidements angulaires (300) étant espacés et répartis autour de l'axe (X) selon une répartition uniforme.

2. Embrayage humide (K0, E1, E2) selon la revendication 1, dans lequel un évidement angulaire (300) de la platine d'arrêt du piston d'actionnement délimite avec l'au moins une gorge de sortie (200), une zone d'évacuation commune (200B) du lubrifiant dont l'aire d'évacuation commune (λ4) est supérieure à l'aire (λ1) d'un orifice de sortie (259) d'un conduit d'alimentation (250).

3. Embrayage humide (K0, E1, E2) selon la revendication 1 ou 2, dans lequel la zone de butée (310) de la platine d'arrêt (31) du piston d'actionnement délimite avec l'au moins une gorge de sortie (200) du moyeu d'alimentation, une zone tampon (200A) angulaire de circulation du lubrifiant.

4. Embrayage humide (K0, E1, E2) selon la revendication précédente, dans lequel deux évidements angulaires (300) délimitent entre eux un secteur de butée (355) angulaire de la platine d'arrêt du piston d'actionnement, reçu en butée contre la portion de sortie (25) et qui recouvre au moins partiellement une gorge de sortie (200) de telle manière à délimiter en partie ladite zone tampon (200A) angulaire de circulation du lubrifiant, ledit secteur de butée étant en particulier ménagé en deçà du diamètre extérieur (D2) de la portion de sortie du moyeu d'alimentation.

5. Embrayage humide (K0, E1, E2) selon la revendication précédente, dans lequel une gorge de sortie (200) est d'une dimension angulaire (w2) strictement supérieure à la dimension angulaire (w3) d'un secteur de butée (355), en particulier un secteur de butée (355) angulaire de la platine d'arrêt recouvrant partiellement une gorge de sortie (200) selon une superficie (λ3) comprise entre 1/3 et 9/10 de l'aire de circulation (λ2) de la gorge de sortie.

6. Embrayage humide (K0, E1, E2) selon l'une des revendications précédentes, dans lequel: - au moins un des conduits d'alimentation (250) est aligné axialement avec un évidement angulaire (300) de telle manière à déboucher directement dans la chambre d'équilibrage, et/ou
- au moins un des conduits d'alimentation (250) est décalé angulairement par rapport à un évidement angulaire (300) de telle manière à déboucher indirectement dans la chambre d'équilibrage.

7. Embrayage humide (K0, E1, E2) selon l'une des revendications précédentes, dans lequel l'au moins une gorge de sortie (200) s'étend autour de l'axe (X) sur au moins 60 degrés, de préférence sur au moins 180 degrés, le moyeu d'alimentation comprenant par exemple une seule gorge de sortie (200) circulaire s'étendant de manière continue notamment sur 360 degrés, ou encore deux à cinq gorge(s) de sortie (200) angulaires s'étendant sur au moins 60 degrés.

8. Embrayage humide (K0, E1, E2) selon l'une des revendications précédentes, dans lequel la platine d'arrêt (31) délimite en partie la chambre d'équilibrage (56), la platine d'arrêt (31) étant configurée pour entourer au moins partiellement la portion de sortie (25) du moyeu d'alimentation, en particulier dans la position débrayée de l'embrayage humide.

9. Embrayage humide (K0, E1, E2) selon l'une des revendications précédentes, dans lequel ladite au moins une gorge de sortie (200) du moyeu d'alimentation débouche radialement en deçà d'une piste de guidage (230) de la portion de sortie (25) du moyeu d'alimentation sur laquelle le piston d'actionnement (30) est mobile axialement.

10. Embrayage humide (K0, E1, E2) selon l'une des revendications précédentes, dans lequel la chambre d'équilibrage (56) est rendue étanche en partie par un support d'étanchéité (70), ledit support d'étanchéité (70) frottant sur le piston d'actionnement (30) et supportant un dispositif de rappel élastique (40) qui est agencé pour ramener le piston d'actionnement dans la position débrayée de l'embrayage humide (E1, E2).

11. Embrayage humide selon la revendication précédente, dans lequel la platine d'arrêt (31) est rapportée et intercalée axialement entre le dispositif de rappel élastique (40) et le fond (32) du piston d'actionnement (30), en particulier la platine d'arrêt (31) est de forme complémentaire avec le fond du piston d'actionnement et avec une plaque de retenue du dispositif de rappel élastique (40).

12. Embrayage humide selon la revendication 10 ou 11, dans lequel ladite au moins une gorge de sortie (200) débouche radialement au-delà d'une soudure (100) fixant le support d'étanchéité (70) sur la portion de sortie (25) du moyeu d'alimentation, en particulier :
ladite soudure (100) étant réalisée depuis le diamètre intérieur (D1) de la portion de sortie (25),
ladite soudure (100) étant continue sur 360 degrés, réalisée avec ou sans apport de matière, par exemple une soudure laser.

13. Embrayage humide (K0, E1, E2) selon l'une des revendications précédentes, dans lequel le moyeu d'alimentation (20) comprend :
- un canal d'alimentation (210) alimentant en lubrifiant la chambre commande (46), et
- une bifurcation (215) au niveau de la portion de sortie (25) depuis laquelle sont formés les conduits d'alimentation (250) à destination de la chambre d'équilibrage (56).

14. Module d'embrayage (M) humide pour système de groupe motopropulseur comprenant au moins :
- un premier embrayage (E1) et un deuxième embrayage (E2) disposé radialement à l'intérieur du premier embrayage (E1), commandés pour accoupler sélectivement un arbre menant à un premier arbre mené ou à un deuxième arbre mené, par exemple de boite de vitesses,
- un embrayage de coupure (K0) de couple, commandé pour accoupler sélectivement un arbre menant à une machine électrique tournante, qui est disposé radialement au-dessus des premier et deuxième embrayages (E1, E2),
dans lequel les embrayages (K1, E1, E2) comprennent chacun une chambre de commande (46, 46A, 46B), à laquelle est associée une chambre d'équilibrage (56, 56A, 56B),
au moins l'un desdits embrayages est un embrayage humide selon l'une des revendications précédentes, ledit moyeu d'alimentation étant commun aux embrayages (K1, E1, E2) et alimentant distinctement lesdits chambres de commande (46, 46A, 46B) et d'équilibrage (56, 56A, 56B).

## Patentansprüche

1. Nasskupplung (K0, E1, E2) für ein Antriebsstrangsystem, umfassend um eine Achse X herum mindestens:
- eine Mehrlamellenanordnung (K0, E1, E2), die zum Teil von einem Lamellenträger (10) aufgenommen ist, der fest an einer Versorgungsnabe (20) für Schmiermittel montiert ist,
- einen Betätigungskolben (30) der Mehrlamellenkupplung (K0, E1, E2), der in der Versorgungsnabe (20) aufgenommen ist und der in Bezug auf die Versorgungsnabe zwischen einer eingerückten Stellung und einer ausgerückten Stellung der Nasskupplung axial beweglich ist,
wobei die Versorgungsnabe (20) zum Teil mit dem Betätigungskolben eine Steuerkammer (46) begrenzt, der eine Ausgleichskammer (56) zugeordnet ist,
wobei die Ausgleichskammer durch Versorgungsleitungen (250) eines Ausgangabschnitts (25) der Versorgungsnabe mit Schmiermittel versorgt wird, die gemeinsam in mindestens einer eckigen Ausgangsnut (200) des Ausgangsabschnitts (25) der Versorgungsnabe (20) münden, wobei der Betätigungskolben (30) eine einstückige oder angesetzte Halteplatte (31) umfasst, die einen Anschlagbereich (310) umfasst, der dazu ausgestaltet ist, den Betätigungskolben axial gegen den Ausgangsabschnitt (25) der Versorgungsnabe zu stoppen, wobei mindestens eine eckige Ausnehmung (300) von dem Anschlagbereich (310) der Halteplatte (31) aus ausgebildet ist, um das in der mindestens einen Ausgangsnut (200) mündende Schmiermittel abzuführen, **dadurch gekennzeichnet, dass** die Halteplatte (31) eine Mehrzahl von eckigen Ausnehmungen (300) umfasst, die fluidisch mit der mindestens einen Ausgangsnut (200) in Verbindung stehen, wobei die eckigen Ausnehmungen (300) gemäß einer gleichförmigen Verteilung um die Achse (X) herum beabstandet und verteilt sind.

2. Nasskupplung (K0, E1, E2) nach Anspruch 1, wobei eine eckige Ausnehmung (300) der Halteplatte des Betätigungskolbens mit der mindestens einen Ausgangsnut (200) einen gemeinsamen Abführungsbereich (200B) für das Schmiermittel begrenzt, dessen gemeinsame Abführungsfläche (λ4) größer als die Fläche (λ1) einer Ausgangsöffnung (259) einer Versorgungsleitung (250) ist.

3. Nasskupplung (K0, E1, E2) nach Anspruch 1 oder 2, wobei der Anschlagbereich (310) der Halteplatte (31) des Betätigungskolbens mit der mindestens einen Ausgangsnut (200) der Versorgungsnabe einen eckigen Pufferbereich (200A) zur Zirkulation des Schmiermittels begrenzt.

4. Nasskupplung (K0, E1, E2) nach dem vorhergehenden Anspruch, wobei zwei eckige Ausnehmungen (300) untereinander einen eckigen Anschlagsektor (355) der Halteplatte des Betätigungskolbens begrenzen, der auf Anschlag gegen den Ausgangsabschnitt (25) aufgenommen ist und der mindestens teilweise eine Ausgangsnut (200) so bedeckt, dass der eckige Pufferbereich (200A) zur Zirkulation des Schmiermittels zum Teil begrenzt wird, wobei der Anschlagsektor insbesondere diesseits des Außendurchmessers (D2) des Ausgangsabschnitts der Versorgungsnabe ausgebildet ist.

5. Nasskupplung (K0, E1, E2) nach dem vorhergehenden Anspruch, wobei eine Ausgangsnut (200) von einer Winkelabmessung (ω2) ist, die strikt größer als die Winkelabmessung (ω3) eines Anschlagsektors (355) ist, insbesondere eines eckigen Anschlagsektors (355) der Halteplatte, der teilweise eine Ausgangsnut (200) gemäß einer Oberfläche (λ3) zwischen 1/3 und 9/10 der Zirkulationsfläche (λ2) der Ausgangsnut bedeckt.

6. Nasskupplung (K0, E1, E2) nach einem der vorhergehenden Ansprüche, wobei: - mindestens eine der Versorgungsleitungen (250) axial mit einer eckigen Ausnehmung (300) fluchtet, so dass sie direkt in der Ausgleichskammer mündet, und/oder
- mindestens eine der Versorgungsleitungen (250) in Bezug auf eine eckige Ausnehmung (300) axial versetzt ist, so dass sie indirekt in der Ausgleichskammer mündet.

7. Nasskupplung (K0, E1, E2) nach einem der vorhergehenden Ansprüche, wobei sich die mindestens eine Ausgangsnut (200) um die Achse (X) herum über mindestens 60 Grad, bevorzugt über mindestens 180 Grad, erstreckt, wobei die Versorgungsnabe zum Beispiel eine einzige runde Ausgangsnut (200) umfasst, die sich durchgängig insbesondere über 360 Grad erstreckt, oder aber zwei bis fünf eckige Ausgangsnuten (200), die sich über mindestens 60 Grad erstrecken.

8. Nasskupplung (K0, E1, E2) nach einem der vorhergehenden Ansprüche, wobei die Halteplatte (31) zum Teil die Ausgleichskammer (56) begrenzt, wobei die Halteplatte (31) dazu ausgestaltet ist, mindestens teilweise den Ausgangsabschnitt (25) der Versorgungsnabe zu umgeben, insbesondere in der ausgerückten Stellung der Nasskupplung.

9. Nasskupplung (K0, E1, E2) nach einem der vorhergehenden Ansprüche, wobei die mindestens eine Ausgangsnut (200) der Versorgungsnabe radial diesseits einer Führungsbahn (230) des Ausgangsabschnitts (25) der Versorgungsnabe mündet, auf welcher der Betätigungskolben (30) axial beweglich ist.

10. Nasskupplung (K0, E1, E2) nach einem der vorhergehenden Ansprüche, wobei die Ausgleichskammer (56) zum Teil durch einen Dichtungsträger (70) abgedichtet wird, wobei der Dichtungsträger (70) auf dem Betätigungskolben (30) reibt und eine elastische Rückstellvorrichtung (40) trägt, die dazu eingerichtet ist, den Betätigungskolben in der ausgerückten Stellung der Nasskupplung (E1, E2) zurückzuführen.

11. Nasskupplung nach dem vorhergehenden Anspruch, wobei die Halteplatte (31) angesetzt ist und axial zwischen die elastische Rückstellvorrichtung (40) und den Boden (32) des Betätigungskolbens (30) gesetzt ist, wobei die Halteplatte (31) insbesondere von einer zu dem Boden des Betätigungskolbens und zu einer Rückhalteplatte der elastischen Rückstellvorrichtung (40) komplementären Form ist.

12. Nasskupplung nach Anspruch 10 oder 11, wobei die mindestens eine Ausgangsnut (200) radial jenseits einer Schweißung (100) mündet, die den Dichtungsträger (70) an dem Ausgangsabschnitt (25) der Versorgungsnabe befestigt, wobei im Besonderen:
die Schweißung (100) von dem Innendurchmesser (D1) des Ausgangsabschnitts (25) aus ausgeführt ist, wobei die Schweißung (100) über 360 Grad durchgängig ist, mit oder ohne Materialzugabe ausgeführt ist, zum Beispiel eine Laserschweißung.

13. Nasskupplung (K0, E1, E2) nach einem der vorhergehenden Ansprüche, wobei die Versorgungsnabe (20) umfasst:
- einen Versorgungskanal (210), der die Steuerkammer (46) mit Schmiermittel versorgt, und
- eine Verzweigung (215) an dem Ausgangsabschnitt (25), von der aus die Versorgungsleitungen (250) zu der Ausgleichskammer (56) gebildet sind.

14. Nasskupplungsmodul (M) für ein Antriebsstrangsystem, umfassend mindestens:
- eine erste Kupplung (E1) und eine radial innerhalb der ersten Kupplung (E1) angeordnete zweite Kupplung (E2), die gesteuert werden, um eine Antriebswelle selektiv mit einer ersten angetriebenen Welle oder mit einer zweiten angetriebenen Welle, zum Beispiel eines Schaltgetriebes, zu koppeln,
- eine Drehmomenttrennkupplung (K0), die gesteuert wird, um eine Antriebswelle selektiv mit einer umlaufenden elektrischen Maschine zu koppeln, und die radial über den ersten und zweiten Kupplungen (E1, E2) angeordnet ist,
wobei die Kupplungen (K1, E1, E2) jeweils eine Steuerkammer (46, 46A, 46B) umfassen, der eine Ausgleichskammer (56, 56A, 56B) zugeordnet ist,
wobei mindestens eine der Kupplungen eine Nasskupplung nach einem der vorhergehenden Ansprüche ist, wobei die Versorgungsnabe den Kupplungen (K1, E1, E2) gemeinsam ist und die Steuerkammern (46, 46A, 46B) und Ausgleichskammern (56, 56A, 56B) getrennt versorgt.

## Claims

1. Wet clutch (K0, E1, E2) for a powertrain system comprising, about an axis X, at least:
- a multi-disc assembly (K0, E1, E2), received in part by a disc support (10) fixedly assembled to a supply hub (20) for supplying lubricant,
- an actuating piston (30) of said multi-disc clutch (K0, E1, E2), which is received in the supply hub (20) and which is axially movable relative to the supply hub between an engaged position and a disengaged position of the wet clutch,
the supply hub (20) delimiting in part with the actuating piston a control chamber (46), with which a balancing chamber (56) is associated,
wherein the balancing chamber is supplied with lubricant via supply conduits (250) of an outlet portion (25) of the supply hub opening together into at least one angular outlet groove (200) of said outlet portion (25) of the supply hub (20),
the actuating piston (30) comprising a one-piece or attached stop plate (31), comprising an abutment zone (310) configured to axially stop the actuating piston against the outlet portion (25) of the supply hub, at least one angular cut-out (300) being made from the abutment zone (310) of the stop plate (31) to drain off the lubricant emerging in said at least one outlet groove (200),
**characterized in that** the stop plate (31) comprises a plurality of angular cut-outs (300), which are in fluidic communication with the at least one outlet groove (200), said angular cut-outs (300) being spaced apart and distributed around the axis (X) with a uniform distribution.

2. Wet clutch (K0, E1, E2) according to Claim 1, wherein an angular cut-out (300) in the stop plate of the actuating piston delimits, with the at least one outlet groove (200), a common drainage zone (200B) for the lubricant, of which the common drainage area (λ4) is greater than the area (λ1) of an outlet hole (259) of a supply conduit (250).

3. Wet clutch (K0, E1, E2) according to Claim 1 or 2, wherein the abutment zone (310) of the stop plate (31) of the actuating piston delimits, with the at least one outlet groove (200) in the supply hub, an angular buffer zone (200A) for circulation of the lubricant.

4. Wet clutch (K0, E1, E2) according to the preceding claim, wherein two angular cut-outs (300) delimit between them an angular abutment sector (355) of the stop plate of the actuating piston, received in abutment against the outlet portion (25) and at least partially covering an outlet groove (200) in such a way as to delimit in part said angular buffer zone (200A) for circulation of the lubricant, said abutment sector being in particular made short of the outer diameter (D2) of the outlet portion of the supply hub.

5. Wet clutch (K0, E1, E2) according to the preceding claim, wherein an outlet groove (200) has an angular dimension (ω2) strictly greater than the angular dimension (ω3) of an abutment sector (355), in particular an angular abutment sector (355) of the stop plate, partially covering an outlet groove (200) by a surface area (λ3) of between 1/3 and 9/10 of the circulation area (λ2) of the outlet groove.

6. Wet clutch (K0, E1, E2) according to one of the preceding claims, wherein: - at least one of the supply conduits (250) is axially aligned with an angular cut-out (300) in such a way as to open directly into the balancing chamber, and/or
- at least one of the supply conduits (250) is angularly offset relative to an angular cut-out (300) in such a way as to open indirectly into the balancing chamber.

7. Wet clutch (K0, E1, E2) according to one of the preceding claims, wherein the at least one outlet groove (200) extends around the axis (X) over at least 60 degrees, preferably over at least 180 degrees, the supply hub comprising for example a single circular outlet groove (200) extending continuously notably over 360 degrees, or two to five angular outlet groove(s) (200) extending over at least 60 degrees.

8. Wet clutch (K0, E1, E2) according to one of the preceding claims, wherein the stop plate (31) delimits in part the balancing chamber (56), the stop plate (31) being configured to at least partially surround the outlet portion (25) of the supply hub, in particular in the disengaged position of the wet clutch.

9. Wet clutch (K0, E1, E2) according to one of the preceding claims, wherein said at least one outlet groove (200) in the supply hub opens out radially below a guide track (230) on the outlet portion (25) of the supply hub, on which track the actuating piston (30) is axially movable.

10. Wet clutch (K0, E1, E2) according to one of the preceding claims, wherein the balancing chamber (56) is partly sealed by a sealing support (70), said sealing support (70) rubbing on the actuating piston (30) and supporting an elastic return device (40) that is designed to return the actuating piston in the disengaged position of the wet clutch (E1, E2).

11. Wet clutch according to the preceding claim, wherein the stop plate (31) is attached and inserted axially between the elastic return device (40) and the bottom (32) of the actuating piston (30), in particular the stop plate (31) has a shape complementary to the bottom of the actuating piston and to a retention plate of the elastic return device (40).

12. Wet clutch according to Claim 10 or 11, wherein said at least one outlet groove (200) opens out radially beyond a weld (100) securing the sealing support (70) to the outlet portion (25) of the supply hub, in particular:
said weld (100) being produced from the inner diameter (D1) of the outlet portion (25),
said weld (100) being continuous over 360 degrees, produced with or without the addition of material, for example a laser weld.

13. Wet clutch (K0, E1, E2) according to one of the preceding claims, wherein the supply hub (20) comprises:
- a supply channel (210) supplying lubricant to the control chamber (46), and
- a fork (215) at the outlet portion (25) from which are formed the supply conduits (250) destined for the balancing chamber (56).

14. Wet clutch module (M) for a powertrain system comprising at least:
- a first clutch (E1) and a second clutch (E2) positioned radially on the inside of the first clutch (E1), which are operated in such a way as to selectively couple a drive shaft to a first driven shaft or to a second driven shaft, for example a gearbox,
- a torque disconnect clutch (K0), which is operated in such a way as to selectively couple a drive shaft to a rotary electric machine, and which is positioned radially above the first and second clutches (E1, E2),
wherein the clutches (K0, E1, E2) each comprise a control chamber (46, 46A, 46B), with which a balancing chamber (56, 56A, 56B) is associated,
at least one of said clutches is a wet clutch according to one of the preceding claims, said supply hub being common to the clutches (K0, E1, E2) and supplying said control chamber (46, 46A, 46B) and balancing chamber (56, 56A, 56B) separately.
